(19) Europäisches Patentamt
European Patent Office
Office européen des brevets

(11) EP 4 796 608 A1

(12) EUROPEAN PATENT APPLICATION
published in accordance with Art. 153(4) EPC

(43) Date of publication:
**26.08.2026 Bulletin 2026/35**

(21) Application number: **24879787.0**

(22) Date of filing: **17.10.2024**

(51) International Patent Classification (IPC):
***C09D 183/06*** *(2006.01)* ***C09D 7/63*** *(2018.01)*
***C09D 7/65*** *(2018.01)* ***C09D 123/26*** *(2006.01)*
***C09D 175/04*** *(2006.01)*

(52) Cooperative Patent Classification (CPC):
**C09D 7/63; C09D 7/65; C09D 123/26; C09D 175/04; C09D 183/06**

(86) International application number:
**PCT/JP2024/037054**

(87) International publication number:
**WO 2025/084366 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 JP 2023179048**

(71) Applicant: **Momentive Performance Materials Japan LLC**
**Tokyo 107-6119 (JP)**

(72) Inventor: **KIMURA Masanori**
**Tokyo 107-6119 (JP)**

(74) Representative: **Gille Hrabal Partnerschaftsgesellschaft mbB**
**Patentanwälte**
**Brucknerstraße 20**
**40593 Düsseldorf (DE)**

# (54) AQUEOUS COATING AGENT COMPOSITION

(57) Provided is an aqueous coating agent composition that contains the following components (A) to (F) and with which a cured coating film having excellent adhesiveness to a substrate, wear resistance, and/or abnormal noise inhibiting performance can be obtained.
(A) a polyorganosiloxane containing hydroxyl groups at both terminals and/or a branched (partially crosslinked) polyorganosiloxane containing a hydroxyl group at a terminal;
(B) elastomer particles having a volume-average particle diameter of 0.1 to 80 μm;
(C) a trifunctional silane compound represented by the general formula: $R^1Si(OR^2)_3$, and/or a partially hydrolyzed condensate thereof, wherein $R^1$ represents a phenyl group, an alkenyl group, or an alkyl group having 1 or 2 carbons, and $R^2$ may be the same or different and represents an unsubstituted monovalent hydrocarbon group;
(D) an amino group-containing alkoxysilane represented by the general formula: $(R^3O)_{3-n}(R^4)_nSiR^5\text{-NH-}R^6$, and/or a partially hydrolyzed condensate thereof, wherein $R^3$ and $R^4$ may be the same or different and represent an unsubstituted monovalent hydrocarbon group, "n" represents 0 or 1, $R^5$ represents an unsubstituted divalent hydrocarbon group, and $R^6$ represents a hydrogen atom, an unsubstituted or halogen- or cyano group-substituted monovalent hydrocarbon group, or an aminoalkyl group;
(E) water; and
(F) a synthetic resin [excluding (A) and (B)].



Processed by Luminess, 75001 PARIS (FR)

## Description

### Field of the Invention

The present invention relates to an aqueous coating agent composition that can be used as a surface-treating agent or a coating agent for, for example, automotive weather strip materials, printer blades, vibration-proof rubber, rubber parts of building material gaskets, or the like.

### Background of the Invention

A coating agent composed of a polyorganosiloxane composition has been conventionally applied to ethylene-propylene-diene ternary copolymer (EPDM) rubber used as automotive weather strips, as well as various rubber products in order to impart, to their surfaces, nontackiness, water repellency, wear resistance, slipperiness, abnormal noise inhibiting performance, or the like.

A known example of such a coating agent is a composition obtained by adding polyorganosiloxane and/or organoalkoxysilane having a hydrogen atom bonded to a silicon atom and a curing catalyst to polydiorganosiloxane having a hydroxyl group at a terminal, and the like.

However, since these compositions contain organic solvents, development of an aqueous emulsion-type coating agent using no organic solvent is in progress. In addition, due to electrification of automobiles in recent years, higher silence is required inside a vehicle, and development of a coating agent having abnormal noise inhibiting performance for addressing the same is in progress.

As an emulsion-type silicone-based coating agent having improved durability, adhesiveness (adhesion), and the like of a coating film of an aqueous coating agent, proposed are a composition in which various siloxane compounds are combined (JP-A 8-245882), a coating agent in which a chlorinated polyolefin having a maleic anhydride group is blended in a dealcoholization-condensation-type silicone-based emulsion (JP-A 2001-207106), a coating agent in which a specific adhesion-improving component (such as an aminosilane compound, an epoxysilane compound, a carboxylic acid and the like) is blended in a dehydrogenation-condensation-type silicone emulsion (JP-A 2002-188057).

Further, in these conventional coating agents, an organotin compound such as dibutyltin dilaurate, namely a compound having a Sn-C bond in which at least one carbon atom is directly bonded to a tin atom, is blended as a curing catalyst in order to obtain a sufficiently cured coating film in a short time.

JP-A 2019-19188 describes an invention of a rubber film-forming silicone emulsion composition containing: (A) an organopolysiloxane having at least two hydroxyl groups per molecule; (B) an aminoalkyltrialkoxysilane serving as a crosslinker for component (A); (C) a vinyltrialkoxysilane; (D) a surfactant; and (E) water, the composition being free of organotin compounds. Further, the document describes, as the application, "The rubber film-forming silicone emulsion composition of the invention finds applications, for example, damage protecting agent, water repellent, and release agent for paper sheets, plastic sheets and rubber articles, damage protecting agent, water repellent, water-proof agent, handle improver, and sealer for textiles, water repellent, water-proof agent, and release agent for concrete, mortar and wood." (paragraph [0057]).

### Summary of the Invention

In one embodiment, the present invention has a problem of providing an aqueous coating agent composition with which a cured coating film having excellent adhesiveness to a substrate, wear resistance, and/or abnormal noise inhibiting performance can be obtained.

In one embodiment, the present invention provides an aqueous coating agent composition containing:

(A) a polyorganosiloxane containing hydroxyl groups at both terminals and/or a branched (partially crosslinked) polyorganosiloxane containing a hydroxyl group at a terminal [hereinafter, referred to as component (A)];

(B) elastomer particles having a volume-average particle diameter of 0.1 to 80 μm [hereinafter, referred to as component (B)];

(C) a trifunctional silane compound represented by the general formula: $R^1Si(OR^2)_3$, and/or a partially hydrolyzed condensate thereof [hereinafter, referred to as compound (C)],

wherein $R^1$ represents a phenyl group, an alkenyl group, or an alkyl group having 1 or 2 carbons, and $R^2$ may be the same or different and represents an unsubstituted monovalent hydrocarbon group;

(D) an amino group-containing alkoxysilane represented by the general formula: $(R^3O)_{3-n}(R^4)_nSiR^5\text{-}NH\text{-}R^6$, and/or a partially hydrolyzed condensate thereof [hereinafter, referred to as component (D)],

wherein $R^3$ and $R^4$ may be the same or different and represent an unsubstituted monovalent hydrocarbon group, "n" represents 0 or 1, $R^5$ represents an unsubstituted divalent hydrocarbon group, and $R^6$ represents a hydrogen atom, an

unsubstituted or halogen- or cyano group-substituted monovalent hydrocarbon group, or an aminoalkyl group;
(E) water [hereinafter, referred to as component (E)]; and
(F) a synthetic resin [excluding component (A) and component (B)] [hereinafter, referred to as component (F)].

In one embodiment, the aqueous coating agent composition of the present invention can form a cured coating film having excellent adhesiveness to a substrate, wear resistance, and/or abnormal noise inhibiting performance.

Embodiments of the Invention

<Component (A)>

In one embodiment, component (A) is a polyorganosiloxane containing hydroxyl groups at both terminals and/or a branched (partially crosslinked) polyorganosiloxane containing a hydroxyl group at a terminal. Component (A) may be involved in the curing reaction by the reactivity of the hydroxyl group bonded to a silicon atom at the molecular terminal.

In one embodiment, examples of an organic group bonded to a silicon atom in the polydiorganosiloxane of component (A) include: alkyl groups such as a methyl group, an ethyl group, a propyl group, a butyl group, and a hexyl group; alkenyl groups such as a vinyl group and a propenyl group; aryl groups such as a phenyl group; aralkyl groups such as a phenethyl group; and groups in which hydrogen atoms in these hydrocarbon groups are partially substituted with a halogen atom, a nitrile group, and the like. In one embodiment, a methyl group is preferable because of balance between ease of synthesis and physical properties of the coating film after being cured, and the like. In one embodiment, component (A) may be blended as an emulsion containing component (A) and component (E) in manufacturing the composition of the present invention. Note that the emulsion herein may be used to mean to also include a solid-liquid dispersion.

In one embodiment, a viscosity of the polydiorganosiloxane of component (A), in the case of a linear polyorganosiloxane containing hydroxyl groups at both terminals, may be preferably 50 to 10,000,000 mPa·s, more preferably 1,000 to 5,000,000 mPa·s, and further preferably 100,000 to 2,000,000 mPa·s at 25°C. A viscosity of less than 50 mPa·s may cause a coating film after being cured to be brittle, and a viscosity of more than 10,000,000 mPa·s may cause difficulty in obtaining a stable emulsion containing component (A). Further, in one embodiment, in the case of the branched (partially crosslinked) polyorganosiloxane containing a hydroxyl group at a terminal, a viscosity thereof at 25°C when diluted with toluene to 50% may be preferably 100 to 10,000,000 mPa·s, more preferably 10,000 to 5,000,000 mPa·s, and further preferably 100,000 to 1,000,000 mPa·s. A viscosity of less than 100 mPa·s may cause a coating film after being cured to be brittle, and a viscosity of more than 10,000,000 mPa·s may cause difficulty in obtaining a stable emulsion containing component (A). This viscosity may be a value measured by using a rotary viscometer (DVPlus, manufactured by AMETEK Brookfield) under a condition at 25°C.

In one embodiment, component (A) may be used singly, or two or more thereof may be mixed for use. Further, in one embodiment, when the viscosity thereof is 100,000 mPa·s or more, known emulsion polymerization is preferably employed to manufacture a stable emulsion containing component (A).

<Component (B)>

In one embodiment, component (B) is elastomer particles having a volume-average particle diameter of 0.1 to 80 μm. In one embodiment, a material of the elastomer particles of component (B) is not particularly limited as long as it is an entropically elastic body and has properties of being deformed by an external force and recovering the deformation when the external force is removed, so-called elastomer, and examples thereof include known various elastomers. Specific examples thereof include, for example: synthetic rubbers such as urethane rubber, silicone rubber, acrylic rubber, fluorine rubber, chloroprene rubber, butadiene rubber, ethylene-propylene-diene copolymerization rubber (EPDM), epichlorohydrin rubber, and the like; synthetic resins such as polyolefins, styrene-based elastomers such as styrene-butadiene rubber, and the like, vinyl-chloride-based elastomers such as a polyblend of nitrile rubber and vinyl chloride, and the like, silicone resin elastomers, and the like; and others. In one embodiment, of these, component (B) is preferably elastomer particles selected from silicone elastomer particles containing a silicone rubber material and polyurethane particles containing an urethane rubber material, and more preferably elastomer particles selected from silicone elastomer particles containing a silicone rubber material. In one embodiment, component (B) may be used singly, or two or more thereof may be mixed for use.

In one embodiment, component (B) may be blended as an emulsion containing component (B) and component (E) in manufacturing the composition of the present invention.

In one embodiment, the silicone elastomer particles can be manufactured by condensation-reacting a polyorganosiloxane having at least two hydroxyl groups bonded to a silicon atom, namely silanol groups, in one molecule and a trifunctional or tetrafunctional silane compound represented by the general formula: $R^7{}_mSi(OR^8)_{4-m}$ or a partially hydrolyzed condensate thereof, then emulsifying the obtained liquid crosslinkable polyorganosiloxane in water in the

presence of a surfactant, and performing a condensation reaction for crosslinking and curing. In the formula, $R^7$ may be the same or different and represents a substituted or unsubstituted monovalent hydrocarbon group, and specific examples thereof include: alkyl groups such as a methyl group, an ethyl group, a propyl group, a butyl group, a pentyl group, a hexyl group, an octyl group, a decyl group, and a dodecyl group; alkenyl groups such as a vinyl group and an allyl group; aryl groups such as a phenyl group, a tolyl group, and a xylyl group; and aralkyl groups such as a 2-phenylethyl group and a 2-phenylpropyl group. In one embodiment, a methyl group, an ethyl group, a vinyl group, or a phenyl group is preferable as the example of $R^7$. $R^8$ may be the same or different and represents an unsubstituted monovalent hydrocarbon group. As the example of $R^8$, a methyl group, an ethyl group, or a propyl group is preferable. "m" represents 0 or 1. Alternatively, also usable as the silicone elastomer particles are particles prepared by emulsifying a polyorganosiloxane containing a vinyl group in the molecule and a polyorganohydrogensiloxane in water with a surfactant, adding thereto a platinum compound as a catalyst to cause a hydrosilylation reaction for crosslinking and curing, and then coating the periphery of the resulting mixture as a core with a silicone resin.

In one embodiment, a volume-average particle diameter of component (B) may be 0.1 to 80 μm, preferably 1 to 50 μm, and more preferably 5 to 50 μm. If a volume-average particle diameter of component (B) is less than 0.1 μm, slipperiness may be deteriorated, and wear resistance and abnormal noise inhibiting performance may be deteriorated. If a volume-average particle diameter of component (B) is more than 80 μm, the particles may tend to fall from the cured coating film, and wear resistance may be deteriorated. In one embodiment, the volume-average particle diameter of component (B) may be measured with a particle size distribution measurement device (LS-230; manufactured by Beckman Coulter, Inc.) (see Example 1 in JP-A 2006-104456).

In one embodiment, when a component (B) that is not in an emulsion form is used in manufacturing the composition of the present invention, a mixture in which component (B) and a surfactant are mixed in advance is preferably used. In one embodiment, the surfactant is preferably an amphoteric surfactant. As examples of the amphoteric surfactant, an alkylamine oxide is preferable. As examples of the alkylamine oxide, a dimethylalkylamine oxide is preferable. As examples of the alkyl group in the alkylamine oxide, a lauryl group, a myristyl group, a group derived from natural oil and fat such as coconut oil, or the like are preferable. In one embodiment, the alkylamine oxide may be added in the form of an emulsion or aqueous solution (solid content proportion: 10 to 50 mass%) mixed with component (B) in advance. Alternatively, in one embodiment, even when component (B) is in an emulsion form, a surfactant such as the alkylamine oxide may be added in order to stabilize the dispersion of elastomer particles.

<Component (C)>

In one embodiment, component (C) is a trifunctional silane compound represented by the general formula: $R^1Si(OR^2)_3$, and/or a partially hydrolyzed condensate thereof, wherein $R^1$ represents a phenyl group, an alkenyl group, or an alkyl group having 1 or 2 carbons, and $R^2$ may be the same or different and represents an unsubstituted monovalent hydrocarbon group. In one embodiment, component (C) is a component that acts as a crosslinking component for component (A). In the formula, the number of carbons of the alkenyl group of $R^1$ may be, for example, 2 to 4. In the formula, as examples of $R^1$, a methyl group, an ethyl group, a vinyl group, or a phenyl group is preferable. In the formula, the number of carbons of the monovalent hydrocarbon group of $R^2$ may be, for example, 1 to 6. In the formula, examples of $R^2$ include alkyl groups such as a methyl group, an ethyl group, a propyl group, an isopropyl group, a butyl group, or a hexyl group, and a methyl group or an ethyl group is preferable.

In one embodiment, component (C) is preferably selected from vinyltriethoxysilane, vinyltrimethoxysilane, phenyltriethoxysilane, methyltriethoxysilane, and ethyltriethoxysilane. In one embodiment, component (C) may be used singly, or two or more thereof may be mixed for use.

<Component (D)>

In one embodiment, component (D) is an amino group-containing alkoxysilane represented by the general formula: $(R^3O)_{3-n}(R^4)_nSiR^5\text{-}NH\text{-}R^6$, and/or a partially hydrolyzed condensate thereof, wherein $R^3$ and $R^4$ may be the same or different and represent an unsubstituted monovalent hydrocarbon group, "n" represents 0 or 1, $R^5$ represents an unsubstituted divalent hydrocarbon group, and $R^6$ represents a hydrogen atom, an unsubstituted or halogen- or cyano group-substituted monovalent hydrocarbon group, or an aminoalkyl group. Component (D) may be a component that acts as a catalyst for a crosslinking reaction of component (A). In the formula, examples of $R^3$ and $R^4$ include the same groups as those for $R^2$ in the aforementioned formula representing component (C). All the above description about $R^2$ may be applied also for $R^3$ and $R^4$. In the formula, the number of carbons of the divalent hydrocarbon group of $R^5$ may be, for example, 1 to 6. Examples of $R^5$ include alkylene groups such as a methylene group, an ethylene group, a propylene group, a tetramethylene group, a hexamethylene group, a methylethylene group, and the like, and in one embodiment, a propylene group is preferable. $R^6$ represents a hydrogen atom, an unsubstituted or halogen- or cyano group-substituted monovalent hydrocarbon group, or an aminoalkyl group. The number of carbons of the unsubstituted or substituted

monovalent hydrocarbon group may be, for example, 1 to 8. Examples of the monovalent hydrocarbon group include: alkyl groups such as a methyl group, an ethyl group, a propyl group, a butyl group, and the like; aryl groups such as a phenyl group, a tolyl group, and the like; and aralkyl groups such as a phenylmethyl group (a benzyl group), a phenylethyl group (a phenethyl group), and the like. The number of carbons of the aminoalkyl group may be, for example, 1 to 6. Examples of the aminoalkyl group include an aminoethyl group, an N-aminoethylaminoethyl group, and the like. As examples of $R^6$, a hydrogen atom or an aminoethyl group is preferable. Component (D) may be used singly, or two or more thereof may be mixed for use.

In one embodiment, examples of component (D) include those selected from 3-(2-aminoethylamino)propyldimethoxymethylsilane, 3-(2-aminoethylamino)propyltrimethoxysilane, an oligomer (a hydrolyzed condensate) of 3-(2-aminoethylamino)propyldimethoxymethylsilane, 3-aminopropyldiethoxymethylsilane, 3-aminopropyltriethoxysilane, and 3-aminopropyltrimethoxysilane.

<Component (F)>

In one embodiment, component (F) is a synthetic resin [excluding component (A) and component (B)]. In one embodiment, component (F) is preferably a component that improves wear resistance and adhesiveness of the cured coating film formed on a substrate with the aqueous coating agent composition of the present invention. For example, component (F) may be an adhesiveness-improving component. The synthetic resin according to the present invention is not particularly limited, and examples thereof include polymerization-based resins, polycondensation-based resins, or addition-polymerization-based resins. In one embodiment, examples of the synthetic resin of component (F) include: polymerization-based resins such as polyolefin-based, acrylic-based, vinyl-based, styrene-based, and butadiene-based resins and the like; polycondensation-based resins such as alkyd-based, polyester-based, polyamide-based, polyimide-based, phenol-based, urea-based, melamine-based, and guanamine-based resins and the like; and addition-polymerization-based resins such as polyether-based, polythioether-based, polysulfone-based, polycarbonate-based, polyurea-based, polyurethane-based, polyurethane-polyurea-based, epoxy-based, fluorine-based, and silicone-based resins, and the like. In one embodiment, component (F) is preferably selected from a polyolefin resin and a polyurethane resin, and more preferably selected from a polyolefin resin having a carboxyl group or a neutralized salt thereof and a polyurethane resin having a carboxyl group or a neutralized salt thereof. When component (F) has a carboxyl group, the carboxyl group contained in the resin is preferably neutralized with a basic compound described later in order to manufacture an aqueous dispersion and to improve the stability. While examples in the case of the polyolefin resin include polypropylene and polyethylene, polyethylene is preferable, and those partially chlorinated and those copolymerized with a monomer having an acrylic group or a methacrylic group may also be used. In one embodiment, component (F) may be used singly, or two or more thereof may be mixed for use. In one embodiment, commercially available acid-modified resins may be used as component (F).

In one embodiment, as a method for allowing a synthetic resin to contain a carboxyl group, a method of copolymerizing a compound having at least one carboxyl group or acid anhydride group in the molecule (in the monomer unit) may be used, and examples thereof include random copolymerization, block copolymerization, graft copolymerization, and the like. Examples of the compound having at least one carboxyl group or acid anhydride group in the molecule (in the monomer unit) include, specifically in the case of the polyolefin resin, acrylic acid, methacrylic acid, maleic acid, maleic anhydride, itaconic acid, itaconic anhydride, fumaric acid, crotonic acid, and the like, in addition to a half ester and a half amide of an unsaturated dicarboxylic acid, and others. Among these, acrylic acid, methacrylic acid, maleic acid, and maleic anhydride are preferable, and acrylic acid and maleic anhydride are particularly preferable. In the case of the polyurethane resin, diglycol acids typified by 2,2-dimethylolpropionic acid, 2,2-dimethylolbutanoic acid, and 2,2-dimethylollactic acid may be used as a chain extender.

In one embodiment, the basic compound to neutralize the carboxyl group is preferably ammonia or an organic amine compound. Examples of the organic amine compound include, for example, triethylamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, 3-methoxypropylamine, monoethanolamine, morpholine, N-methylmorpholine, N-ethylmorpholine, and others.

In one embodiment, component (F) is preferably used in an aqueous dispersion form such as an emulsion and a suspension in manufacturing the composition of the present invention. Examples of a method for manufacturing the aqueous dispersion containing component (F) include a forced emulsifying method using a surfactant and an ionomer method of neutralizing a carboxyl group in the molecule with a basic compound to disperse the same in water, and when an organic solvent is used during the reaction, this organic solvent is preferably removed after the reaction. When component (F) is used as an aqueous dispersion, it preferably has a solid content concentration within a range of 10 to 40 mass%.

<Optional components, composition, and others>

In one embodiment, the aqueous coating agent composition of the present invention may further contain a pigment as an optional component. As the pigment, known pigments, for example, according to application of the aqueous coating agent composition may be selected. In one embodiment, the pigment is preferably carbon black. The carbon black may be blended in the form of aqueous dispersion liquid.

In one embodiment, when component (F) is a resin having a carboxyl group or a neutralized salt thereof, the aqueous coating agent composition of the present invention may further contain a crosslinker that can react with the carboxyl group in component (F) as an optional component for the purpose of improving wear resistance and/or imparting chemical resistance. As the crosslinker, known crosslinkers according to application of the aqueous coating agent composition may be selected. As examples of the crosslinker, those selected from polyisocyanate, carbodiimide, melamine, epoxy, and oxazoline are preferable.

In one embodiment, the aqueous coating agent composition of the present invention may appropriately contain inorganic and organic ultraviolet-ray absorbents, a matting agent, a surfactant, a thickener, a defoaming agent, and/or a preservative, and others in order to improve weather resistance within the range in which the effect of the present invention can be obtained.

In one embodiment, the aqueous coating agent composition of the present invention can form a cured coating film having excellent adhesiveness to a substrate, wear resistance, and/or abnormal noise inhibiting performance even if not containing a metal element such as a tin-based element derived from a curing catalyst.

In one embodiment, a content of component (B) in the aqueous coating agent composition of the present invention is preferably 5 to 120 parts by mass, more preferably 10 to 100 parts by mass, and further preferably 15 to 80 parts by mass relative to 100 parts by mass of component (A). In one embodiment, a content of component (C) in the aqueous coating agent composition of the present invention is preferably 3 to 40 parts by mass, more preferably 5 to 30 parts by mass, and further preferably 10 to 20 parts by mass relative to 100 parts by mass of component (A). In one embodiment, a content of component (D) in the aqueous coating agent composition of the present invention is preferably 0.3 to 5 parts by mass, more preferably 0.5 to 3 parts by mass, and further preferably 1 to 2 parts by mass relative to 100 parts by mass of component (A). In one embodiment, a content of component (E) in the aqueous coating agent composition of the present invention is preferably 50 to 2000 parts by mass, more preferably 100 to 1500 parts by mass, and further preferably 300 to 1000 parts by mass relative to 100 parts by mass of component (A). In one embodiment, a content of component (F) in the aqueous coating agent composition of the present invention is preferably 30 to 200 parts by mass, more preferably 40 to 180 parts by mass, and further preferably 50 to 150 parts by mass relative to 100 parts by mass of component (A).

In one embodiment, as for the contents of components (A) to (F) in the aqueous coating agent composition of the present invention, the content of component (B) is preferably 10 to 120 parts by mass and further preferably 15 to 100 parts by mass, the content of component (C) is preferably 3 to 40 parts by mass and more preferably 5 to 30 parts by mass, the content of component (D) is preferably 0.3 to 5 parts by mass and more preferably 0.5 to 3 parts by mass, the content of component (E) is preferably 50 to 2000 parts by mass and more preferably 100 to 1500 parts by mass, and the content of component (F) is preferably 30 to 200 parts by mass and more preferably 40 to 180 parts by mass, relative to 100 parts by mass of component (A). The ranges of these contents may be optionally combined.

The contents of the optional components in the aqueous coating agent composition of the present invention may be appropriately decided in consideration of the application, the property, and the like of the optional components, and may be selected, for example, from a range of 0 to 500 parts by mass or 0 to 300 parts by mass relative to 100 parts by mass of component (A). In one embodiment, a surfactant may be used in an amount of 5 to 50 parts by mass or 10 to 30 parts by mass relative to 100 parts by mass of component (A). In one embodiment, a pigment may be used in an amount of 0.3 to 5 parts by mass or 0.5 to 3 parts by mass relative to 100 parts by mass of component (A).

In one embodiment, the aqueous coating agent composition of the present invention may contain components (A) to (F) in total in an amount of, for example, 50 to 100 mass%, preferably 70 to 100 mass% based on the total mass of the composition.

In one embodiment of the aqueous coating agent composition of the present invention, when components (A) to (D) and component (F) are used as blending components in a dispersion state such as an emulsion, the above parts by mass and mass% may be calculated on the basis of the solid content. The amount of component (E) may be calculated as a total amount of water including the water used in other components as a dispersion medium.

In one embodiment, the aqueous coating agent composition of the present invention can be manufactured by mixing components (A) to (F) and the optional components. The mixing order of the components may be appropriately decided in consideration of the property, the form, and the like of the components.

In one embodiment, the aqueous coating agent composition of the present invention can be used by applying the aqueous coating agent composition of the present invention on a surface of a substrate composed of paper, rubber, plastic, metal, and the like to be a treatment target, by a method such as dip coating, spray coating, brush applying, knife coating,

roll coating, or the like.

Subsequently, the composition may be left to stand for several days at a room temperature (10 to 30°C) or appropriately heated in accordance with the level of heat resistance of the substrate to cure a coating film. It is preferable that the heating condition be, for example, at a temperature of 120 to 180°C for 30 seconds to 5 minutes when the substrate is paper; for example, at a temperature of 80 to 180°C for 1 to 10 minutes when the substrate is rubber; and, for example, at a temperature of 70 to 150°C for 30 seconds to 5 minutes when the substrate is plastic.

In one embodiment, the aqueous coating agent composition of the present invention contains no organotin compound-based curing catalyst of which restriction or regulation on use has been increasingly strengthened due to concern about its toxicity, and thus, it can be used safely without anxiety across use applications, fields of application, countries where the composition is used, among others.

In one embodiment, when a surface of each of various substrates is treated with the aqueous coating agent composition of the present invention, a cured coating film having excellent uniform coatability and having excellent adhesiveness to the substrate, wear resistance, and/or abnormal noise inhibiting performance can be obtained. That is, one embodiment of the present invention includes a cured coating film obtained by curing the aqueous coating agent composition of the present invention.

In one embodiment, the aqueous coating agent composition of the present invention can form a coating film having excellent adhesiveness, wear resistance, and abnormal noise inhibiting performance on a substrate such as rubber, plastic, or the like, particularly on a substrate made of foamed or non-foamed EPDM rubber, where a coating film having sufficient adhesiveness was not able to be obtained with a conventional silicone composition for forming a non-tacky coating film.

Further, in one embodiment, the aqueous coating agent composition of the present invention has excellent stability after blending the components, and has a long pot-life. Furthermore, in one embodiment, substrates having low heat resistance and large substrates that are hard to be heat-treated can also be treated with the aqueous coating agent composition of the present invention. Moreover, in one embodiment, the cured coating film of the aqueous coating agent composition of the present invention has good nontackiness to other substances, has water repellency, and/or has excellent wear resistance and abnormal noise inhibiting performance.

Examples

Hereinafter, some embodiments of the present invention will be specifically described with Examples, but the present invention is not limited to the following Examples. In Examples, all physical property values such as viscosity and the like represent values at 25°C and a relative humidity of 50%, and % represents mass%.

Component (A)

(A)-1: Polyorganosiloxane emulsion containing hydroxyl groups at both terminals, a product manufactured in-house at Momentive Performance Materials, an emulsion-polymerized emulsion with a solid content concentration of 50% (polymer viscosity: about 1,400,000 mPa·s)

(A)-2: Branched (partially crosslinked) polyorganosiloxane emulsion containing a hydroxyl group at a terminal, a product manufactured in-house at Momentive Performance Materials, an emulsion-polymerized emulsion with a solid content concentration of 50% (polymer viscosity when diluted with toluene to 50%: about 400,000 mPa·s)

Component (B)

(B)-1: Silicone elastomer particle emulsion, a product manufactured in-house at Momentive Performance Materials, an emulsion-polymerized silicone elastomer particle emulsion with a solid content of 40% (a starting material therefor is a polyorganosiloxane modified with diethoxy at a terminal having a viscosity of about 100 mPa·s, volume-average particle diameter: about 15 μm)

(B)-2: Silicone elastomer particle emulsion, a product manufactured in-house at Momentive Performance Materials, an emulsion-polymerized silicone elastomer particle emulsion with a solid content of 40% (a starting material therefor is a polyorganosiloxane modified with diethoxy at a terminal having a viscosity of about 100 mPa·s, volume-average particle diameter: about 5 μm)

(B)-3: Silicone elastomer particle emulsion, a product manufactured in-house at Momentive Performance Materials, an emulsion-polymerized silicone elastomer particle emulsion with a solid content of 40% (a starting material therefor

is a polyorganosiloxane modified with diethoxy at a terminal having a viscosity of about 100 mPa·s, volume-average particle diameter: about 50 μm)

(B)-4: Silicone elastomer particles, Serasnow SP-14, manufactured by KCC CORPORATION, silicone elastomer particles having a volume-average particle diameter of about 11 μm

(B)-5: Polyurethane particles, Artpearl C-800T, manufactured by Negami Chemical Industrial Co., Ltd., polyurethane particles having a volume-average particle diameter of about 6 μm

Component (B') (comparative component of component (B))

(B')-1: Silicone elastomer particle emulsion, a product manufactured in-house at Momentive Performance Materials, an emulsion-polymerized silicone elastomer particle emulsion with a solid content of 40% (a starting material therefor is a polyorganosiloxane modified with diethoxy at a terminal having a viscosity of about 90 mPa·s, volume-average particle diameter: about 90 μm)

(B')-2: Silicone resin particles, Tospearl 145, manufactured by Momentive Performance Materials, silicone resin particles having a volume-average particle diameter of about 5 μm

(B)-4, (B)-5, and (B')-2 were preliminary mixed with a surfactant, described later, for use before blending.

Component (C) (crosslinking component)

(C)-1: Vinyltriethoxysilane, Silquest A-151, manufactured by Momentive Performance Materials

(C)-2: Vinyltrimethoxysilane, Silquest A-171, manufactured by Momentive Performance Materials

(C)-3: Phenyltriethoxysilane, a reagent manufactured by Tokyo Chemical Industry Co., Ltd.

(C)-4: Methyltriethoxysilane, Silquest A-1622, manufactured by Momentive Performance Materials

(C)-5: Ethyltriethoxysilane, a reagent manufactured by Tokyo Chemical Industry Co., Ltd.

Component (C') (comparative component of component (C))

(C')-1: Propyltriethoxysilane, a reagent manufactured by Tokyo Chemical Industry Co., Ltd.

(C')-2: Hexyltriethoxysilane, a reagent manufactured by Tokyo Chemical Industry Co., Ltd.

(C')-3: n-octyltriethoxysilane, Silquest A-137, manufactured by Momentive Performance Materials

Component (D)

(D)-1: 3-(2-aminoethylamino)propyldimethoxymethylsilane, Silquest A-2120, manufactured by Momentive Performance Materials

(D)-2: 3-(2-aminoethylamino)propyltrimethoxysilane, Silquest A-1120, manufactured by Momentive Performance Materials

(D)-3: Oligomer (hydrolyzed condensate) of 3-(2-aminoethylamino)propyldimethoxymethylsilane, a product manufactured in-house at Momentive Performance Materials

(D)-4: 3-aminopropyldiethoxymethylsilane, a reagent manufactured by Tokyo Chemical Industry Co., Ltd.

(D)-5: 3-aminopropyltriethoxysilane, Silquest A-1110, manufactured by Momentive Performance Materials

(D)-6: 3-aminopropyltrimethoxysilane, Silquest A-1100, manufactured by Momentive Performance Materials

Component (D') (comparative component of component (D))

(D')-1: Aqueous ammonia solution (28%), a reagent manufactured by Tokyo Chemical Industry Co., Ltd.

(D')-2: Aminoethanol, a reagent manufactured by Tokyo Chemical Industry Co., Ltd.

(D')-3: Triethylamine, a reagent manufactured by Tokyo Chemical Industry Co., Ltd.

Component (E)

Component (E) may be deionized water.

Component (F)

(F)-1: Acid-modified chlorinated polyolefin resin emulsion, HARDLEN EW-5303, manufactured by TOYOBO MC Corporation, a solid content concentration: 30%, a synthetic resin having a dimethylaminoethanol salt of a carboxyl group
(F)-2: Acid-modified polyurethane resin aqueous dispersion, HYDRAN WLS-201, manufactured by DIC Corporation, a solid content concentration: 35%, a synthetic resin having an ammonium salt of a carboxyl group
(F)-3: Acid-modified polyethylene resin aqueous dispersion, Arrowbase SB-1010, manufactured by UNITIKA LTD., a solid content concentration: 25%, a synthetic resin having a dimethylaminoethanol salt of a carboxyl group
(F)-4: Acid-modified polypropylene resin aqueous dispersion, Arrowbase DA-1010, manufactured by UNITIKA LTD., a solid content concentration: 25%, a synthetic resin having a dimethylaminoethanol salt of a carboxyl group
Surfactant: AMPHITOL 20N, manufactured by Kao Corporation, an aqueous solution of lauryldimethylamine oxide, solid content concentration: 35%
Pigment: Carbon black aqueous dispersion, MICROPIGMO WMBK-5, manufactured by ORIENT CHEMICAL INDUSTRIES CO., LTD., solid content concentration: 20%

Examples 1 to 26 and Comparative Examples 1 to 15

Components shown in each of Tables 1 to 6 were mixed to prepare aqueous coating agent compositions. The coating agent composition in each example was applied on a surface of a foamed EPDM rubber sheet by using a spray gun. Thereafter, heat-drying was performed in an oven at 150 °C for 5 minutes, thereby obtaining a test molded body in which a cured coating film having a thickness of about 10 μm was formed on a surface of the foamed EPDM rubber sheet. By using these test molded bodies, the following tests were performed. Each of Tables 1 to 6 shows the results.

(Particle falling property)

The surface of the cured coating film was rubbed with a finger to evaluate the presence or absence of falling of the particles.
Good: No particle falling was observed.
Poor: Particle falling was observed.
Note that Comparative Examples 10 and 14 were not subjected to the evaluation of particle falling property because component (B) was not blended.

(Adhesiveness)

The surface of the cured coating film was rubbed with a work glove to evaluate the presence or absence of peeling of the cured coating film.
Good: No peeling was observed.
Poor: Peeling was observed.

(Bleed-out property)

The surface of the cured coating film was rubbed with a finger to evaluate the presence or absence of a rubbed scratch.
Good: No rubbed scratch remained.
Poor: Bled substance was removed to leave a rubbed scratch.

(Abnormal noise evaluation-1)

The surface of the cured coating film was rubbed with a coated plate to evaluate the presence or absence of abnormal noise.

A: No sticking due to a stick-slip phenomenon occurred, and no abnormal noise was generated.
B: Sticking due to a stick-slip phenomenon occurred, but no abnormal noise was generated.
C: Abnormal noise was generated.
D: Unevaluable due to particle falling, peeling of the cured coating film, and the like during evaluation.

(Abnormal noise evaluation-2)

The surface of the cured coating film was rubbed with an uncoated steel plate to evaluate the presence or absence of abnormal noise.

A: No sticking due to a stick-slip phenomenon occurred, and no abnormal noise was generated.
B: Sticking due to a stick-slip phenomenon occurred, but no abnormal noise was generated.
C: Abnormal noise was generated.
D: Unevaluable due to particle falling, peeling of the cured coating film, and the like during evaluation.

(Wear resistance evaluation)

Wear on the surface of the cured coating film was evaluated with a Gakushin-type rubbing (clockmeter) tester.
Passed: evaluated as passed were those in which the substrate surface was not exposed even by worn 10000 times with a load of 1 kg using a Cotton (Kanakin No. 3) test cloth as a wear member.
Poor: evaluated as poor were those in which the substrate surface was exposed before the wear test with 10000 times was completed under the above conditions.

[Table 1]

| | | | | Example | | | | | | | | |
|---|---|---|---|---|---|---|---|---|---|---|---|---|
| | | | | 1 | 2 | 3 | 4 | 5 | 6 | 7 | 8 | 9 |
| Aqueous coating agent composition | Blending amount (parts by mass) | (A) | (A)-1 | 100 | | 100 | 100 | 100 | | 100 | 100 | 100 |
| | | | (A)-2 | | 100 | | | | 100 | | | |
| | | (B) | (B)-1 | 64 | 64 | | | | | | 16 | 64 |
| | | | (B)-2 | | | 64 | | | | | | |
| | | | (B)-3 | | | | 64 | | | | | |
| | | | (B)-4 | | | | | 64 | 64 | | | |
| | | | (B)-5 | | | | | | | 64 | | |
| | | Surfactant | | | | | | 14 | 14 | 14 | | |
| | | (C) | (C)-1 | 16 | 16 | 16 | 16 | 16 | 16 | 16 | 16 | |
| | | | (C)-2 | | | | | | | | | 16 |
| | | | (C)-3 | | | | | | | | | |
| | | | (C)-4 | | | | | | | | | |
| | | | (C)-5 | | | | | | | | | |
| | | (D) | (D)-1 | 1.2 | 1.2 | 1.2 | 1.2 | 1.2 | 1.2 | 1.2 | 1.2 | 1.2 |
| | | | (D)-2 | | | | | | | | | |
| | | | (D)-3 | | | | | | | | | |
| | | | (D)-4 | | | | | | | | | |
| | | | (D)-5 | | | | | | | | | |
| | | | (D)-6 | | | | | | | | | |
| | | (E) | Water | 557.2 | 557.2 | 557.2 | 557.2 | 543.2 | 543.2 | 543.2 | 605.2 | 557.2 |
| | | (F) | (F)-1 | 60 | 60 | 60 | 60 | 60 | 60 | 60 | 60 | 60 |
| | | | (F)-2 | | | | | | | | | |
| | | | (F)-3 | | | | | | | | | |
| | | | (F)-4 | | | | | | | | | |
| | | Pigment | | 1.6 | 1.6 | 1.6 | 1.6 | 1.6 | 1.6 | 1.6 | 1.6 | 1.6 |
| Evaluation | Particle falling property | | | Good | Good | Good | Good | Good | Good | Good | Good | Good |
| | Adhesiveness | | | Good | Good | Good | Good | Good | Good | Good | Good | Good |
| | Bleed out property | | | Good | Good | Good | Good | Good | Good | Good | Good | Good |
| | Abnormal noise evaluation-1 | | | A | A | A | A | A | A | A | A | A |
| | Abnormal noise evaluation-2 | | | B | B | B | B | B | B | C | B | B |
| | Wear resistance evaluation | | | Passed | Passed | Passed | Passed | Passed | Passed | Passed | Passed | Passed |

[Table 2]

| | | | | Example | | | | | | | | |
|---|---|---|---|---|---|---|---|---|---|---|---|---|
| | | | | 10 | 11 | 12 | 13 | 14 | 15 | 16 | 17 | 18 |
| Aqueous coating agent composition | Blending amount (parts by mass) | (A) | (A)-1 | 100 | 100 | 100 | 100 | 100 | 100 | 100 | 100 | 100 |
| | | | (A)-2 | | | | | | | | | |
| | | (B) | (B)-1 | 64 | 64 | 64 | 64 | 64 | 64 | 64 | 64 | 64 |
| | | | (B)-2 | | | | | | | | | |
| | | | (B)-3 | | | | | | | | | |
| | | | (B)-4 | | | | | | | | | |
| | | | (B)-5 | | | | | | | | | |
| | | Surfactant | | | | | | | | | | |
| | | (C) | (C)-1 | | | | 16 | 16 | 16 | 16 | 16 | 16 |
| | | | (C)-2 | | | | | | | | | |
| | | | (C)-3 | 16 | | | | | | | | |
| | | | (C)-4 | | 16 | | | | | | | |
| | | | (C)-5 | | | 16 | | | | | | |
| | | (D) | (D)-1 | 1.2 | 1.2 | 1.2 | | | | | | 1.2 |
| | | | (D)-2 | | | | 1.2 | | | | | |
| | | | (D)-3 | | | | | 1.2 | | | | |
| | | | (D)-4 | | | | | | 1.2 | | | |
| | | | (D)-5 | | | | | | | 1.2 | | |
| | | | (D)-6 | | | | | | | | 1.2 | |
| | | (E) | Water | 557.2 | 557.2 | 557.2 | 557.2 | 557.2 | 557.2 | 557.2 | 557.2 | 557.2 |
| | | (F) | (F)-1 | 60 | 60 | 60 | 60 | 60 | 60 | 60 | 60 | |
| | | | (F)-2 | | | | | | | | | 60 |
| | | | (F)-3 | | | | | | | | | |
| | | | (F)-4 | | | | | | | | | |
| | | Pigment | | 1.6 | 1.6 | 1.6 | 1.6 | 1.6 | 1.6 | 1.6 | 1.6 | 1.6 |
| Evaluation | Particle falling property | | | Good | Good | Good | Good | Good | Good | Good | Good | Good |
| | Adhesiveness | | | Good | Good | Good | Good | Good | Good | Good | Good | Good |
| | Bleed out property | | | Good | Good | Good | Good | Good | Good | Good | Good | Good |
| | Abnormal noise evaluation-1 | | | A | A | A | A | A | A | A | A | A |
| | Abnormal noise evaluation-2 | | | B | B | B | B | B | B | B | B | B |
| | Wear resistance evaluation | | | Passed | Passed | Passed | Passed | Passed | Passed | Passed | Passed | Passed |

[Table 3]

| | | | | Example | | | | | | | |
|---|---|---|---|---|---|---|---|---|---|---|---|
| | | | | 19 | 20 | 21 | 22 | 23 | 24 | 25 | 26 |
| Aqueous coating agent composition | Blending amount (parts by mass) | (A) | (A)-1 | 100 | 100 | | | | 100 | 100 | 100 |
| | | | (A)-2 | | | 100 | 100 | 100 | | | |
| | | (B) | (B)-1 | 64 | 64 | 64 | 64 | 64 | | | |
| | | | (B)-2 | | | | | | | | |
| | | | (B)-3 | | | | | | | | |
| | | | (B)-4 | | | | | | 64 | 64 | 64 |
| | | | (B)-5 | | | | | | | | |
| | | Surfactant | | | | | | | 14 | 14 | 14 |
| | | (C) | (C)-1 | 16 | 16 | 16 | 16 | 16 | 16 | 16 | 16 |
| | | | (C)-2 | | | | | | | | |
| | | | (C)-3 | | | | | | | | |
| | | | (C)-4 | | | | | | | | |
| | | | (C)-5 | | | | | | | | |
| | | (D) | (D)-1 | 1.2 | 1.2 | 1.2 | 1.2 | 1.2 | 1.2 | 1.2 | 1.2 |
| | | | (D)-2 | | | | | | | | |
| | | | (D)-3 | | | | | | | | |
| | | | (D)-4 | | | | | | | | |
| | | | (D)-5 | | | | | | | | |
| | | | (D)-6 | | | | | | | | |
| | | (E) | Water | 557.2 | 557.2 | 557.2 | 557.2 | 557.2 | 557.2 | 543.2 | 543.2 |
| | | (F) | (F)-1 | | | | | | | | |
| | | | (F)-2 | | | 60 | | | 60 | | |
| | | | (F)-3 | 60 | | | 60 | | | 60 | |
| | | | (F)-4 | | 60 | | | 60 | | | 60 |
| | | Pigment | | 1.6 | 1.6 | 1.6 | 1.6 | 1.6 | 1.6 | 1.6 | 1.6 |
| Evaluation | Particle falling property | | | Good | Good | Good | Good | Good | Good | Good | Good |
| | Adhesiveness | | | Good | Good | Good | Good | Good | Good | Good | Good |
| | Bleed out property | | | Good | Good | Good | Good | Good | Good | Good | Good |
| | Abnormal noise evaluation-1 | | | A | A | A | A | A | A | A | A |
| | Abnormal noise evaluation-2 | | | A | B | B | A | B | B | A | B |
| | Wear resistance evaluation | | | Passed | Passed | Passed | Passed | Passed | Passed | Passed | Passed |

[Table 4]

| | | | | Comparative Example | | | | |
|---|---|---|---|---|---|---|---|---|
| | | | | 1 | 2 | 3 | 4 | 5 |
| Aqueous coating agent composition | Blending amount (parts by mass) | (A) | (A)-1 | 100 | 100 | 100 | 100 | 100 |
| | | (B) | (B)-1 | | | | 64 | 64 |
| | | (B') | (B')-1 | 64 | | | | |
| | | | (B')-2 | | 64 | 64 | | |
| | | Surfactant | | | 14 | 14 | | |
| | | (C) | (C)-1 | 16 | 16 | 16 | | |
| | | (C') | (C')-1 | | | | 16 | |
| | | | (C')-2 | | | | | 16 |
| | | | (C')-3 | | | | | |
| | | (D) | (D)-1 | 1.2 | 1.2 | 1.2 | 1.2 | 1.2 |
| | | | (D)-6 | | | | | |
| | | (D') | (D')-1 | | | | | |
| | | | (D')-2 | | | | | |
| | | | (D')-3 | | | | | |
| | | (E) | Water | 557.2 | 543.2 | 363.2 | 557.2 | 557.2 |
| | | (F) | (F)-1 | 60 | 60 | | 60 | 60 |
| | | | (F)-3 | | | 60 | | |
| | | Pigment | | 1.6 | 1.6 | 1.6 | 1.6 | 1.6 |
| Evaluation | Particle falling property | | | Poor | Good | Good | Poor | Poor |
| | Adhesiveness | | | Good | Good | Good | Good | Good |
| | Bleed out property | | | Good | Good | Good | Poor | Poor |
| | Abnormal noise evaluation-1 | | | D | C | C | D | D |
| | Abnormal noise evaluation-2 | | | D | C | C | D | D |
| | Wear resistance evaluation | | | Poor | Passed | Passed | Poor | Poor |

[Table 5]

| | | | | Comparative Example | | | | |
|---|---|---|---|---|---|---|---|---|
| | | | | 6 | 7 | 8 | 9 | 10 |
| Aqueous coating agent composition | Blending amount (parts by mass) | (A) | (A)-1 | 100 | 100 | 100 | 100 | 100 |
| | | (B) | (B)-1 | 64 | 64 | 64 | 64 | |
| | | (B') | (B')-1 | | | | | |
| | | | (B')-2 | | | | | |
| | | Surfactant | | | | | | |
| | | (C) | (C)-1 | | 16 | 16 | 16 | 16 |
| | | (C') | (C')-1 | | | | | |
| | | | (C')-2 | | | | | |
| | | | (C')-3 | 16 | | | | |
| | | (D) | (D)-1 | 1.2 | | | | 1.2 |
| | | | (D)-6 | | | | | |
| | | (D') | (D')-1 | | 0.34 | | | |
| | | | (D')-2 | | | 1.2 | | |
| | | | (D')-3 | | | | 1.2 | |
| | | (E) | Water | 557.2 | 557.2 | 557.2 | 557.2 | 461.2 |
| | | (F) | (F)-1 | 60 | 60 | 60 | 60 | 60 |
| | | | (F)-3 | | | | | |
| | | Pigment | | 1.6 | 1.6 | 1.6 | 1.6 | 1.6 |
| Evaluation | Particle falling property | | | Poor | Poor | Poor | Poor | - |
| | Adhesiveness | | | Good | Good | Good | Good | Good |
| | Bleed out property | | | Poor | Poor | Poor | Poor | Good |
| | Abnormal noise evaluation-1 | | | D | D | D | D | C |
| | Abnormal noise evaluation-2 | | | D | D | D | D | C |
| | Wear resistance evaluation | | | Poor | Poor | Poor | Poor | Poor |

[Table 6]

| | | | | Comparative Example | | | | |
|---|---|---|---|---|---|---|---|---|
| | | | | 11 | 12 | 13 | 14 | 15 |
| Aqueous coating agent composition | Blending amount (parts by mass) | (A) | (A)-1 | 100 | 100 | 100 | 100 | 100 |
| | | (B) | (B)-1 | 64 | 64 | 64 | | 64 |
| | | (B') | (B')-1 | | | | | |
| | | | (B')-2 | | | | | |
| | | Surfactant | | | | | | |
| | | (C) | (C)-1 | | 16 | 16 | 16 | |
| | | (C') | (C')-1 | | | | | |
| | | | (C')-2 | | | | | |
| | | | (C')-3 | | | | | |
| | | (D) | (D)-1 | 1.2 | | 1.2 | | |
| | | | (D)-6 | | | | 1.2 | 16 |
| | | (D') | (D')-1 | | | | | |
| | | | (D')-2 | | | | | |
| | | | (D')-3 | | | | | |
| | | (E) | Water | 573.2 | 558.4 | 417.2 | 321.2 | 558.4 |
| | | (F) | (F)-1 | 60 | 60 | | | 60 |
| | | | (F)-3 | | | | | |
| | | Pigment | | 1.6 | 1.6 | 1.6 | 1.6 | 1.6 |
| Evaluation | Particle falling property | | | Poor | Poor | Poor | - | Poor |
| | Adhesiveness | | | Good | Good | Poor | Poor | Good |
| | Bleed out property | | | Poor | Poor | Good | Good | Poor |
| | Abnormal noise evaluation-1 | | | D | D | D | D | D |
| | Abnormal noise evaluation-2 | | | D | D | D | D | D |
| | Wear resistance evaluation | | | Poor | Poor | Poor | Poor | Poor |

In one embodiment, the aqueous coating agent composition of the present invention can be utilized for application in which various rubbers (for example, EPDM rubber) and various plastics are used, for example, for application as a surface treating agent for automotive weather strip materials, printer blades, vibration-proof rubber, or rubber parts of building material gaskets and the like.

Furthermore, in one embodiment, the aqueous coating agent composition of the present invention can be utilized for application of imparting nontackiness and/or water repellency to various substrates including various rubbers (for example, EPDM rubber) and various plastics.

## Claims

1. An aqueous coating agent composition, comprising:

   (A) a polyorganosiloxane containing hydroxyl groups at both terminals and/or a branched (partially crosslinked) polyorganosiloxane containing a hydroxyl group at a terminal [hereinafter, referred to as component (A)];
   (B) elastomer particles having a volume-average particle diameter of 0.1 to 80 μm [hereinafter, referred to as component (B)];
   (C) a trifunctional silane compound represented by the general formula: $R^1Si(OR^2)_3$, and/or a partially hydrolyzed condensate thereof [hereinafter, referred to as compound (C)],
   wherein $R^1$ represents a phenyl group, an alkenyl group, or an alkyl group having 1 or 2 carbons, and $R^2$ may be the same or different and represents an unsubstituted monovalent hydrocarbon group;
   (D) an amino group-containing alkoxysilane represented by the general formula: $(R^3O)_{3-n}(R^4)_nSiR^5\text{-NH-}R^6$, and/or a partially hydrolyzed condensate thereof [hereinafter, referred to as component (D)],
   wherein $R^3$ and $R^4$ may be the same or different and represent an unsubstituted monovalent hydrocarbon group, "n" represents 0 or 1, $R^5$ represents an unsubstituted divalent hydrocarbon group, and $R^6$ represents a hydrogen atom, an unsubstituted or halogen- or cyano group-substituted monovalent hydrocarbon group, or an aminoalkyl group;
   (E) water [hereinafter, referred to as component (E)]; and
   (F) a synthetic resin [excluding component (A) and component (B)] [hereinafter, referred to as component (F)].

2. The aqueous coating agent composition according to claim 1, wherein the polydiorganosiloxane of the component (A) is a linear polyorganosiloxane containing hydroxyl groups at both terminals and having a viscosity at 25°C of 50 to 10,000,000 mPa·s or a branched (partially crosslinked) polyorganosiloxane containing a hydroxyl group at a terminal and having a viscosity of 100 to 10,000,000 mPa·s at 25°C when diluted with toluene to 50%.

3. The aqueous coating agent composition according to claim 1 or 2, wherein the component (B) is silicone elastomer particles and/or polyurethane particles.

4. The aqueous coating agent composition according to any one of claims 1 to 3, wherein the component (B) is silicone elastomer particles and/or polyurethane particles having a volume-average particle diameter of 1 to 50 μm.

5. The aqueous coating agent composition according to any one of claims 1 to 4, wherein, in the formula of the component (C), $R^1$ represents a phenyl group, an alkenyl group having 2 to 4 carbons, or an alkyl group having 1 to 2 carbons, and $R^2$ may be the same or different and represents an unsubstituted monovalent hydrocarbon group having 1 to 6 carbons.

6. The aqueous coating agent composition according to any one of claims 1 to 5, wherein the component (C) is a trifunctional silane compound selected from vinyltriethoxysilane, vinyltrimethoxysilane, phenyltriethoxysilane, methyltriethoxysilane, and ethyltriethoxysilane, and/or a partially hydrolyzed condensate thereof.

7. The aqueous coating agent composition according to any one of claims 1 to 6, wherein, in the formula of the component (D), each of $R^3$ and $R^4$ may be the same or different and represents an unsubstituted monovalent hydrocarbon group having 1 to 6 carbons, $R^5$ represents a divalent hydrocarbon group having 1 to 6 carbons, $R^6$ represents a hydrogen atom, an unsubstituted or halogen- or cyano group-substituted monovalent hydrocarbon group having 1 to 8 carbons, or an aminoalkyl group having 1 to 6 carbons.

8. The aqueous coating agent composition according to any one of claims 1 to 7, wherein the component (D) is an amino group-containing alkoxysilane selected from 3-(2-aminoethylamino)propyldimethoxymethylsilane, 3-(2-aminoethylamino)propyltrimethoxysilane, 3-aminopropyldiethoxymethylsilane, 3-aminopropyltriethoxysilane, and 3-aminopropyltrimethoxysilane, and/or a partially hydrolyzed condensate thereof.

9. The aqueous coating agent composition according to any one of claims 1 to 8, wherein the component (F) is a component for improving wear resistance and adhesiveness of a cured coating film formed on a substrate with the aqueous coating agent composition.

10. The aqueous coating agent composition according to any one of claims 1 to 9, wherein the component (F) is a synthetic resin selected from a polyolefin resin having a carboxyl group or a neutralized salt thereof and a

polyurethane resin having a carboxyl group or a neutralized salt thereof.

**11.** The aqueous coating agent composition according to any one of claims 1 to 10, comprising 10 to 120 parts by mass of the component (B), 3 to 40 parts by mass of the component (C), 0.3 to 5 parts by mass of the component (D), 50 to 2000 parts by mass of the component (E), and 30 to 200 parts by mass of the component (F), relative to 100 parts by mass of the component (A).

**12.** The aqueous coating agent composition according to any one of claims 1 to 11, further comprising a pigment.

**13.** The aqueous coating agent composition according to any one of claims 1 to 12, comprising no organotin compound-based curing catalyst.

**14.** The aqueous coating agent composition according to any one of claims 1 to 13, wherein the aqueous coating agent composition is used for application as a surface treating agent for automotive weather strip materials, printer blades, vibration-proof rubber, or rubber parts of building material gaskets.

**15.** A cured coating film obtained by curing the aqueous coating agent composition according to any one of claims 1 to 14.

## INTERNATIONAL SEARCH REPORT

International application No.
**PCT/JP2024/037054**

### A. CLASSIFICATION OF SUBJECT MATTER

***C09D 183/06***(2006.01)i; ***C09D 7/63***(2018.01)i; ***C09D 7/65***(2018.01)i; ***C09D 123/26***(2006.01)i; ***C09D 175/04***(2006.01)i
FI: C09D183/06; C09D7/65; C09D7/63; C09D123/26; C09D175/04

According to International Patent Classification (IPC) or to both national classification and IPC

### B. FIELDS SEARCHED

Minimum documentation searched (classification system followed by classification symbols)

B32B1/00-43/00;C08K3/00-13/08;C08L1/00-101/14;C09D1/00-10/00;C09D101/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2003-155411 A (SHIN-ETSU CHEMICAL CO., LTD.) 30 May 2003 (2003-05-30) claim 1, paragraphs [0011], [0016], [0019], [0031]-[0032], [0036]-[0053] | 1-15 |
| Y | JP 2019-19188 A (SHIN-ETSU CHEMICAL CO., LTD.) 07 February 2019 (2019-02-07) claim 1, paragraphs [0009], [0025], [0030], [0059]-[0060] | 1-15 |
| Y | WO 2017/047615 A1 (KJ CHEMICALS CORP.) 23 March 2017 (2017-03-23) paragraph [0003] | 1-15 |
| Y | JP 2004-500441 A (EASTMAN CHEMICAL COMPANY) 08 January 2004 (2004-01-08) paragraph [0005] | 10 |
| A | JP 2008-260840 A (MOMENTIVE PERFORMANCE MATERIALS JAPAN LLC) 30 October 2008 (2008-10-30) entire text, all drawings | 1-15 |
| A | JP 2002-327115 A (SHIN-ETSU CHEMICAL CO., LTD.) 15 November 2002 (2002-11-15) entire text | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No. **PCT/JP2024/037054**

| C. DOCUMENTS CONSIDERED TO BE RELEVANT | | |
|---|---|---|
| Category* | Citation of document, with indication, where appropriate, of the relevant passages | Relevant to claim No. |
| A | US 2005/0014894 A1 (FLANNIGAN, William Tait) 20 January 2005 (2005-01-20) entire text | 1-15 |

Form PCT/ISA/210 (second sheet) (July 2022)

**INTERNATIONAL SEARCH REPORT**
**Information on patent family members**

International application No.
**PCT/JP2024/037054**

| Patent document cited in search report | Publication date (day/month/year) | Patent family member(s) | Publication date (day/month/year) |
|---|---|---|---|
| JP 2003-155411 A | 30 May 2003 | (Family: none) | |
| JP 2019-19188 A | 07 February 2019 | US 2020/0165454 A1<br>claim 1, paragraphs [0019], [0056], [0061], [0096]-[0101]<br>EP 3653680 A1<br>CN 110869455 A | |
| WO 2017/047615 A1 | 23 March 2017 | US 2018/0244831 A1<br>paragraph [0003]<br>EP 3351575 A1<br>KR 10-2018-0054725 A<br>CN 108350141 A | |
| JP 2004-500441 A | 08 January 2004 | US 2002/0010257 A1<br>paragraph [0005]<br>EP 1098942 A1 | |
| JP 2008-260840 A | 30 October 2008 | (Family: none) | |
| JP 2002-327115 A | 15 November 2002 | (Family: none) | |
| US 2005/0014894 A1 | 20 January 2005 | EP 1519993 A1<br>entire text | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8245882 A
- JP 2001207106 A
- JP 2002188057 A
- JP 2019019188 A
- JP 2006104456 A